Europäisches Patentamt

European Patent Office

Office européen des brevets

(11) Publication number: **0 451 320 A2**

# EUROPEAN PATENT APPLICATION

(21) Application number: 90115166.2

(22) Date of filing: 07.08.90

(51) Int. Cl.⁵: **F16D 69/02**

(30) Priority: 26.03.90 JP 76524/90

(43) Date of publication of application:
16.10.91 Bulletin 91/42

(84) Designated Contracting States:
**DE FR GB**

(71) Applicant: **AISIN KAKO KABUSHIKI KAISHA**
**1141-1, Aza Okawagahara, Oaza Iino,**
**Fujioka-cho**
**Nishikamo-gun, Aichi-ken(JP)**

(72) Inventor: **Yasui, Yoshiaki, c/o Alsin Kako**
**Kabusiki Kaisha**
**1141-1 Aza Okawagahara, Oaza Iino**
**Fujioka-cho, Nisikamo-gun, Aichi-ken(JP)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**W-8000 München 2(DE)**

(54) **Process for producing matrix for friction material.**

(57) Disclosed is a process for producing a matrix for a friction material comprising the steps of: a fiber compounding step; a fiber carding step; a supplying step; a drawing step; a fiber twisting step; and a yarn assembly step. In the fiber carding step, the tufts of a plurality of organic fibers after being subjected to the fiber compounding step are carded by a carding machine, thereafter at least one of inorganic staple fibers and powder materials are supplied on the surfaces of the tufts in the supplying step, and the tufts are made into slivers in the drawing step. Thus, no force acts on the inorganic staple fibers and the powder materials in the supplying step and the drawing step, and the inorganic staple fibers and the powder materials are hardly broken, fell or scattered accordingly. As a result, a matrix having a uniform composition for a friction material can be produced, the material consumption rates of the inorganic staple fibers and the powder materials have been improved, and a friction mateiral made from the matrix comes to have excellent burst strength, less volume abrasion rate and the like.

FIG.1

## BACKGROUND OF THE INVENTION

### Field of the Invention

The present invention relates to a process for producing a string shape matrix employed by a friction material. A friction material employing a matrix for a friction material produced by a production process of the present invention has a uniform material composition, an improved friction performance and an improved burst strength.

### Related Art Statement

A friction material such as a clutch facing has been widely used. Such a friction material has been produced so far in the following manner: A string shape matrix made from organic fibers, inorganic fibers, friction regulating agents, inorganic fillers and so on is impregnated with a thermosetting resin, wound into a disk shape, and molded thermally.

As for a process for producing the string shape matrix employed as aforementioned, the spinning technology has been adapted conventionally. For instance, such an adaptation is disclosed in Japanese Examined Patent Publication (KOKOKU) No. 9526/1985. In the disclosure, chopped strands made of glass fiber filaments or staple fibers made of carbon fibers, viscose rayon fibers, acrylic fibers, polyvinyl alcohol fibers and so on are compounded, the compounded chopped strands or staple fibers are supplied into a carding machine, thereby carding and thereafter making the compounded chopped strands or staple fibers into slivers. Then, the slivers are twisted into a single yarn. Further, the slivers are twisted together with a filaments such as metallic wires, glass fiber filaments and the like if required, thereby forming a string shape matrix for a friction material.

By the way, a large shear force is applied to the fibers in the fiber compounding process. Accordingly, when the fibers of high rigidity such as glass fibers, rock wool and the like are compounded, the fibers are broken and damaged. In addition, when the inorganic filler powders such as barium sulfate, calcium carbonate and the like are compounded together with the fibers at the same time, the specific gravity difference causes the powder materials to fall and scatter, whereby the material consumption rate of the inorganic filler powders have been degraded and the compositions of the tufts coming out of a compounding machine has been liable to be non-uniform. Hence, there has been the following problem resulting from these causes. Namely, the performance such as the friction performance, the burst strength and the like have fluctuated greatly in a friction material as a final product.

Prior to the present Japanese patent application for the present invention, the applicant of the present invention filed a Japanese patent application for an invention regarding the process for producing a matrix for a friction material. The earlier application was filed under Japanese Patent Application No. 237299/1988 which is not laid-open at the time of the present application. In the earlier application, the applicant disclosed a process for producing a matrix for a friction material comprising the following steps: a fiber compounding step for splitting and compounding a fiber material mainly comprising a plurality of organic fibers at the same time; a supplying step for supplying at least one of inorganic staple fibers and inorganic filler material powders on the surfaces of the tufts of the plurality of organic fibers after being subjected to the fiber compounding step; a fiber carding step for carding the tufts after being subjected to the supplying step; a drawing step for making the tufts into slivers; a fiber twisting step for twisting the slivers together with at least one of inorganic filaments and metallic wires and forming a single yarn; and a yarn assembly step for forming a string shape matrix for a friction material out of a plurality of the single yarns.

According to the process of the invention disclosed in the earlier application, the inorganic staple fibers have been prevented from breaking, and the material consumption rates of the inorganic staple fibers and the inorganic filler material powders have been improved. Therefore, when a friction material is made from a matrix for a friction material produced by the process of the invention disclosed in the earlier application, the friction material comes to have a uniform composition, a good friction performance and good mechanical strength such as the burst strength and the like.

However, the friction material has been required to have a furthermore improved friction performance and mechanical strength as automobiles have been improved to have higher performances recently.

## SUMMARY OF THE INVENTION

The present invention is accordingly an improvement on the production process previously applied for a patent. It is therefore an object of the present invention to further make the composition of a friction material uniform and to further improve the material consumption rates.

The inventors of the present invention have thoroughly reviewed each of the conventional spinning processes. As a result of the review, the inventors have found the following fact: The inorganic staple fibers are broken also in the carding process, though the degree of the breakage is smaller than the breakage occurred in the compounding process. The inventors have thus completed the present invention based on the discovery.

According to the present invention, a process for producing a matrix for a friction material comprises the steps of: a fiber compounding step for splitting and compounding a fiber material mainly comprising a plurality of organic fibers at the same time; a fiber carding step for carding the tufts of the plurality of organic fibers after being subjected to the fiber compounding step; a supplying step for supplying at least one of inorganic staple fibers and powder materials on the surfaces of the tufts being subjected to the carding step; a drawing step for making the tufts being subjected to the supplying step into slivers; a fiber twisting step for twisting the slivers together with at least one of inorganic filaments and metallic wires, thereby forming a single yarn; and a yarn assembly step for forming a string shape matrix for a friction material out of a plurality of the single yarns.

The fiber compounding step is for splitting and at the same time compounding the fiber material mainly comprising a plurality of organic fibers, such as aromatic polyamide fibers, viscose rayon fibers, acrylic fibers, polyvinyl alcohol fibers, cotton fibers and the like, thereby making the organic fibers into tufts. Since the organic fibers are highly flexible, they do not break when the shear force is applied to them in the fiber compounding step. The organic fibers may be either in a filament or staple shape, but they are preferred to be in a filament shape. Thus, the organic fibers are compounded uniformly in their respective filament states. Further, even inorganic fibers can be compounded together with the organic fibers simultaneously when the inorganic fibers are, for instance, steel wool which is highly flexible and unbreakable in the compounding step.

The fiber carding step is for carding the tufts of the organic fibers after being subjected to the fiber compounding step.

The supplying step is one of the major features of the present invention. The supplying step is for supplying at least one of inorganic staple fibers and powder materials on the surfaces of the tufts after being subjected to the carding step.

As for the inorganic staple fibers, glass staple fibers, rock wool, carbon staple fibers, ceramic staple fibers and so on may be employed. Among the inorganic staple fibers, the rock wool is most likely to break. Therefore, the supplying step according to the present invention takes effect especially and greatly on the rock wool.

Further, as for the powder materials, inorganic filler materials, friction regulating agents and the like may be employed. The inorganic filler materials may be barium sulfate, calcium carbonate, magnesium carbonate, diatomaceous earth, dolomite, calcium hydroxide and the like. The friction regulating agents may be cashew dust and so on.

Thus, at least one of the aforementioned inorganic staple fibers and powder materials are supplied on the surfaces of the tufts after being subjected to the carding. The supplying is performed by sprinkling the inorganic staple fibers and/or the powder materials over the surfaces of the tufts.

Here, in the case that both of the inorganic staple fibers and the powder materials are supplied thereon, the powder materials may be supplied simultaneously with the supply of the inorganic staple fibers. However, in the case that both of the inorganic staple fibers and the powder materials are stored altogether in a hopper for the time being and they are supplied simultaneously, there sometimes occurs the fluctuation in the composition of the inorganic staple fibers and the powder materials to be supplied on the surfaces of the tufts because of the specific weight gravity difference and the configuration difference between the inorganic staple fibers and the powder materials. Therefore, it is preferable to supply the powder materials independently of the supply of the inorganic staple fibers.

Thereafter, the tufts on which the inorganic staple fibers and/or the powder materials are supplied are made into slivers by using a drawing frame and the like in the next drawing step. In short, the inorganic staple fibers are prevented from breaking and scattering, because no large shear force is applied to the supplied inorganic staple fibers deposited on the surfaces of the tufts during the supplying step and the drawing step, and because no air convection current occurs in the supplying step and the drawing step. Likewise, the powder materials are prevented from falling and scattering, thereby preventing the material consumption rate of the powder materials from deteriorating.

The slivers obtained by the above-mentioned steps are twisted together with at least one of the inorganic filaments and the metallic wires, and made into a single yarn in the next fiber twisting step. As for the inorganic filaments, glass fiber filaments, rock wool and the like may be used. As for the metallic wires,

3

brass wires, copper wires, aluminum wires, zinc wires, steel wires, stainless steel wires and so on may may be used. The combinations of the slivers, the inorganic filaments and the metallic wires may be selected variously depending on an application and purpose of a friction material.

Finally, the yarn assembly step is for twisting a plurality of the single yarns, thereby forming a string shape matrix for a friction material. The yarn assembly step may be carried out in a manner similar to the conventional yarn assembly step.

The thus obtained matrix for a friction material is then impregnated with a thermosetting resin such as a phenol resin and a melamine resin, and wound into a predetermined disk shape. Thereafter, the impregnated and wound matrix is placed in a mold, and thermally molded into a friction material.

According to the process for producing a friction material of the present invention, a plurality of the organic fibers are mainly compounded in the fiber compounding step.

Then, the thus compounded tufts are subjected to the carding in the carding step. Since the organic fibers are highly flexible, even if they are in a filament shape, they hardly break during the compounding step and the carding step and maintain their initial configurations. Thereafter, at least one of the inorganic staple fibers and the powder materials are supplied on the surfaces of the tufts which is subjected to the carding in the carding step, and then the tufts are made into the slivers in the drawing step. Since the force acting on the inorganic staple fibers during the supplying step and the drawing step is remarkably less than the forces acting on them during the fiber compounding step and the carding step, the breakage of the inorganic staple fibers hardly occurs and the inorganic staple fibers hardly scatter during the supplying step and the drawing step. Likewise, the powder materials fall and scatter in a lesser degree also during the supplying step and the drawing step, whereby the material consumption rate of the inorganic staple fibers and the powder materials can be made less deteriorating.

Finally, the fiber twisting step and the yarn assembly step are carried out in a manner similar to the conventional production process, thereby forming a string shape matrix for a friction material.

Therefore, the inorganic staple fibers have been prevented from breaking, and the improvements on the material consumption rates have enabled to produce a matrix of a uniform composition for a friction material. In addition, fragile materials which have not been added conventionally can be used for a matrix for a friction material, and the degree of freedom in the composition or compounding designing of a friction material has increased accordingly. Since the friction material formed out of the matrix therefor has a uniform composition, it is superior in the friction performance. Similarly, since the friction material can contain the organic fiber filaments and the inorganic staple fibers which have not been damaged at all, it has an excellent mechanical strength such as the burst strength and the like.

BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:

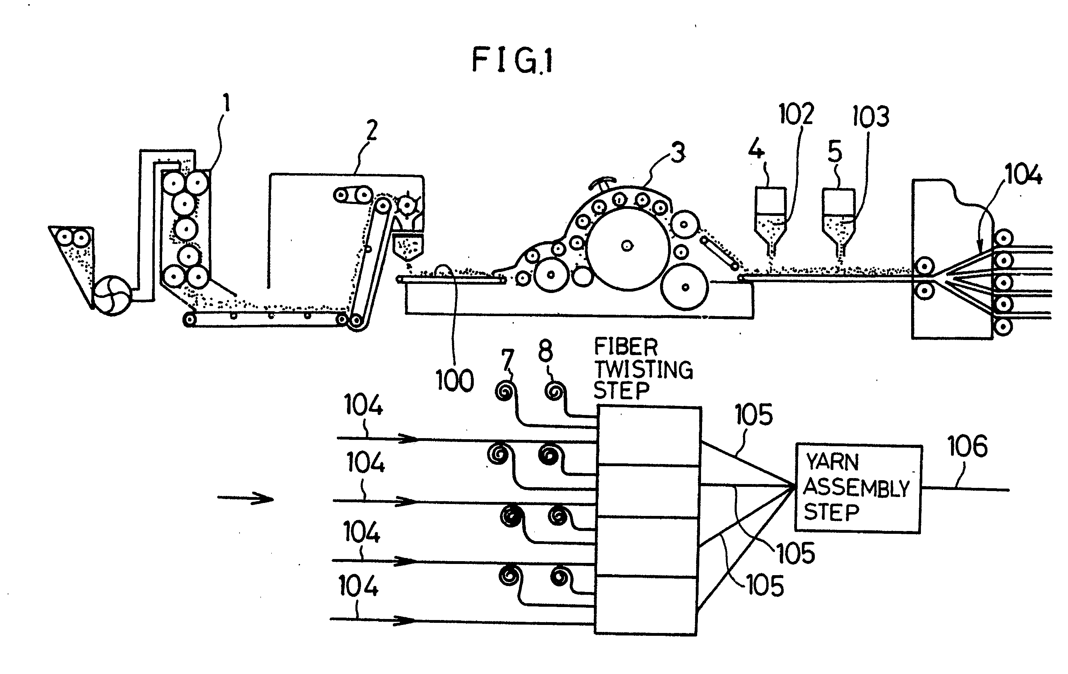

Figure 1 is an explanatory drawing for illustrating a series of apparatuses for carrying out a fiber compounding step, a fiber carding step, a supplying step, a drawing step, a fiber twisting step and a yarn assembly step of a process for producing a matrix for a friction material of a preferred embodiment according to the present invention; and

Figure 2 is a line chart for illustrating variations in the material consumption rates exhibited by the process therefor of the preferred preferred embodiment according to the present invention, comparative examples and conventional examples.

DETAILED DESCRIPTION OF THE PREFERRED EMBODIMENTS OF THE PRESENT INVENTION

Having generally described the present invention, a further understanding can be obtained by reference to certain specific preferred embodiments which are provided herein for purposes of illustration only and are not intended to be limiting unless otherwise specified. The preferred embodiments of the present invention will be hereinafter described in detail with reference to the accompanying drawings.

First Preferred Embodiment

(1) Fiber Compounding Step

Ten (10) parts by weight of rayon filaments (produced by Fuji-bo Co., Ltd.) and 20 parts by weight of aromatic polyamide fiber filaments ("Kevlar (trade mark)" produced by Dupont Co., Ltd.) were supplied into a fiber compounding machine 1, and compounded for 5 to 10 minutes. The thus obtained tufts 100 were then discharged by way of a hopper 2 in a sheet-like shape.

(2) Fiber Carding Step

The tufts 100 in a sheet-like shape were supplied into and carded by a carding machine 3.

(3) Supplying Step

Hoppers 4 and 5 were disposed at positions above an apparatus for transferring the carded tufts 100. Glass staple fibers 102 were made by splitting glass fiber filaments ("135TEX" having 9 $\mu$m in diameter produced by Nihon Ita Garasu Co., Ltd.), and stored in the hopper 4. Cashew dust 103 was stored in the hopper 5. Sixty (60) parts by weight of the glass staple fibers 102 and 10 parts by weight of the cashew dust 103 were respectively supplied onto the tufts transferred in one direction in a sprinkling manner with respect to 30 parts by weight of the tufts 100.

(4) Drawing Step

Then, the tufts 100 with the glass staple fibers 102 and the cashew dust 103 sprinkled were made into slivers 104 with a drawing frame 6.

(5) Fiber Twisting Step

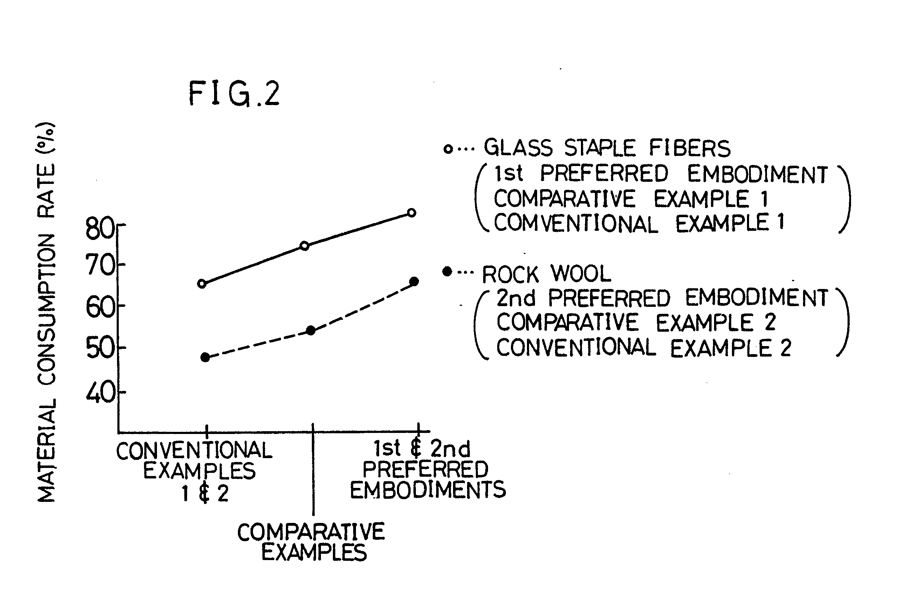

The slivers 104 were twisted into a single yarn 105 together with glass fiber filaments 7 ("135TEX" having 9 $\mu$m in diameter produced by Nihon Ita Garasu Co., Ltd.) and a brass wire 8 (# 38 having 0.15 mm in diameter). Here, as illustrated in Figure 2, the material consumption rate of the glass staple fibers i.e., the rate of the actual weight consumption of the slivers 104 with respect to the calculated weight consumption of the slivers 104, was 80 %. The glass fiber filaments and the brass wire were contained in the single yarn 105 by 20 % by weight and 10 % by weight, respectively, with respect to the whole single yarn taken as 100 % by weight.

(6) Yarn Assembly Step

Three (3) single yarns 105 thus obtained were towed and twisted together. Thus, a string shape matrix 106 for a friction material was prepared.

(7) Evaluation Test

The thus prepared matrix for a friction material was impregnated with 20 % by weight of phenol resin modified with melamine, in which the ratio of the melamine to the phenol resin is 7 to 3 by weight, i.e., melamine/phenol resin = 7/3. The matrix impregnated therewith was wound into a disk shape which was opened at the central portion thereof and which had the outside diameter of 236 mm and the inside diameter of 150 mm. Thereafter, the wound matrix was molded in a mold to form a friction material. The friction material was then installed to a clutch dynamo testing machine, and the initial period friction coefficient, the stable period friction coefficient, the volume abrasion amount on both surfaces and the burst strength were measured and evaluated under the following conditions:
Inertia; 0.3 kgfms$^2$
Speed at engagements; 1800 rpm
Number of engagements; 2000 times, and
Testing temperature; 300 °C
The results of the measurement are summarized in Table 1.

Second Preferred Embodiment

The second preferred embodiment of the present invention was carried out to prepare a matrix for a friction material in a manner similar to the first preferred embodiment except that rock wool ("Es fiber FF" produced by Shin Nittetsu Kagaku Co., Ltd.) having the fiber length of 300 $\mu$m were sprinkled onto the tufts by the same parts by weight instead of the glass staple fibers 102 in the supplying step. Here, the material consumption rate of the rock wool was 65 %. Then, a friction material was formed and evaluated in a manner similar to the first preferred embodiment. The results of the measurement are also summarized in Table 1.

## TABLE 1

| | Preferred Embodiments | | Comparative Examples | | Conventional Examples | |
|---|---|---|---|---|---|---|
| | 1 | 2 | 1 | 2 | 1 | 2 |
| Rayon | 10 | 10 | 10 | 10 | 10 | 10 |
| "Kevlar" | 20 | 20 | 20 | 20 | 20 | 20 |
| Glass Short Fibers | 60 | - | 60 | - | 60 | - |
| Rock Wool | - | 60 | - | 60 | - | 60 |
| Cashew Dust | 10 | 10 | 10 | 10 | 10 | 10 |
| Material Consumption Rate (%) | 80 | 65 | 73 | 53 | 64 | 47 |
| Burst Strength (rpm) | 15000 | 14500 | 14000 | 14000 | 13000 | 12000 |
| Initial Period Friction Coefficient | 0.29 | 0.30 | 0.29 | 0.27 | 0.28 | 0.26 |
| Stable Period Friction Coefficient | 0.35 | 0.35 | 0.35 | 0.35 | 0.34 | 0.33 |
| Volume Abrasion Rate ($\times 10^{-7}$ cm$^3$/kgf·m) | 6.0 | 5.5 | 6.0 | 6.0 | 8.0 | 8.5 |

Comparative Example 1

In Comparative Example 1, 60 parts by weight of glass staple fibers, having the fiber length of 30 mm and cut from the glass fiber filaments ("135TEX" having 9 $\mu$m in diameter produced by Nihon Ita Garasu Co., Ltd.) employed in the fiber combing step and the fiber twisting step of the first preferred embodiment, and 10 parts by weight of the cashew dust 103 were sprinkled onto 30 parts by weight of the tufts after being subjected to the fiber compounding step, and the tufts with the glass staple fibers and the cashew dust 103 sprinkled were supplied into the carding machine 3, and the fiber carding step was carried out thereafter. Nothing was supplied in the supplying step. Other than these arrangements, Comparative Example 1 was carried out to prepare a matrix for a friction material in a manner similar to the first preferred embodiment. Here, the material consumption rate of the glass staple fibers was 73 %. Then, a friction material was formed and evaluated in a manner similar to the first preferred embodiment. The results of the measurement are also summarized in Table 1.

Comparative Example 2

In Comparative Example 2, 60 parts by weight of rock wool ("Es fiber particle-like cotton" produced by Shin Nittetsu Kagaku Co., Ltd.), and 10 parts by weight of the cashew dust 103 were sprinkled onto 30 parts by weight of the tufts after being subjected to the fiber compounding step, and the tufts with the rock wool and the cashew dust 103 sprinkled were supplied into the carding machine 3, and the fiber carding step was carried out thereafter. Nothing was supplied in the supplying step. Other than these arrangements, Comparative Example 2 was carried out to prepare a matrix for a friction material in a manner similar to the first preferred embodiment. Here, the material consumption rate of the rock wool was 53 %. Then, a friction material was formed and evaluated in a manner similar to the first preferred embodiment. The results of the measurement are also summarized in Table 1.

Conventional Example 1

Conventional Example 1 was carried out to prepare a matrix fcr friction material in a manner similar to the first preferred embodiment except the following arrangements: 10 parts by weight of the rayon filaments, 20 parts by weight of the aromatic polyamide fiber filaments, 60 parts by weight of the glass staple fibers identical to the glass staple fibers 102 employed in the first preferred embodiment and 10 parts by weight of the cashew dust were compounded in the fiber compouding step, and nothing was supplied in the supplying step. In Conventional Example 1, the material consumption rate of the glass staple fibers was 64 %, and the glass staple fibers were lost by a large degree. Then, a friction material was formed and evaluated in a manner similar to the first preferred embodiment. The results of the measurement are also summarized in Table 1.

Conventional Example 2

Conventional Example 2 was carried out to prepare a matrix for friction material in a manner similar to the first preferred embodiment except the following arrangements: 10 parts by weight of the rayon filaments, 20 parts by weight of the aromatic polyamide fiber filaments, 60 parts by weight of the rock wool identical to the one employed in the second preferred embodiment and ten (10) parts by weight of the cashew dust were compounded in the fiber compouding step, and nothing was supplied in the supplying step. In Conventional Example 2, the material consumption rate of the rock wool was 47 %, and the rock wool was lost by a large degree. Then, a friction material was formed and evaluated in a manner similar to the first preferred embodiment. The results of the measurement are also summarized in Table 1.

Evaluation

It is apparent from Figure 2 that the production processes of the first and second preferred embodiments offered the most improved material consumption rates among the above-mentioned production processes. The material consumption rates thereof in the production process of the first and second preferred embodiment were better than those offered by the production process of Comparative Examples 1 and 2 according to the earlier patent application which offered improved material consumption rates thereof with respect to those offered by Conventional Examples 1 and 2 according to the prior art. Generally speaking, the material consumption rate of the glass staple fibers is higher than that of the rock wool in all of the above-mentioned production processes. However, the production process of the second preferred embodiment offered the material consumption rate of the rock wool equivalent to that of the glass staple fibers offered by Conventional Example 1. In other words, even in the case that the rock wool is employed, a matrix for a friction material can be manufactured by the production process of the preferred embodiment according to the present invention at a material consumption rate equivalent to the material consumption rate of the glass staple fibers offered by Conventional Example 1. Therefore, it is possible to enjoy higher freedom in the composition or compound designing of a matrix for a friction material according to the production process of the preferred embodiments of the present invention.

In addition, as summarized in Table 1, smaller volume abrasion rates and higher burst strength were exhibited by the friction materials formed out of the matrices produced in accordance with the production processes of the first and second preferred embodiments than those exhibited by Comparative Examples 1 and 2 as well as Conventional Examples 1 and 2. It is apparent that these differences in the performance of the friction material have resulted from the difference in the methods of adding the glass staple fibers, the rock wool and the cashew dust.

Having now fully described the present invention, it will be apparent to one of ordinary skill in the art that many changes and modifications can be made thereto without departing from the spirit or scope of the present invention as set forth herein.

Disclosed is a process for producing a matrix for a friction material comprising the steps of: a fiber compounding step; a fiber carding step; a supplying step; a drawing step; a fiber twisting step; and a yarn assembly step. In the fiber carding step, the tufts of a plurality of organic fibers after being subjected to the fiber compounding step are carded by a carding machine, thereafter at least one of inorganic staple fibers and powder materials are supplied on the surfaces of the tufts in the supplying step, and the tufts are made into slivers in the drawing step. Thus, no force acts on the inorganic staple fibers and the powder materials in the supplying step and the drawing step, and the inorganic staple fibers and the powder materials are hardly broken, fell or scattered accordingly. As a result, a matrix having a uniform composition for a friction material can be produced, the material consumption rates of the inorganic staple fibers and the powder materials have been improved, and a friction mateiral made from the matrix comes to have excellent burst strength, less volume abrasion rate and the like.

## Claims

1. A process for producing a matrix for a friction material comprising the steps of:

   a fiber compounding step for splitting and compounding a fiber material mainly comprising a plurality of organic fibers at the same time;

   a fiber carding step for carding the tufts of said plurality of organic fibers after being subjected to said fiber compounding step;

   a supplying step for supplying at least one of inorganic staple fibers and powder materials on the surfaces of said tufts being subjected to said carding step;

   a drawing step for making said tufts being subjected to said drawing step into slivers;

   a fiber twisting step for twisting said slivers together with at least one of inorganic filaments and metallic wires, thereby forming a single yarn; and

   a yarn assembly step for forming a string shape matrix for a friction material out of a plurality of said single yarns.

2. The process for producing a matrix for a friction material according to claim 1, wherein said organic fibers split and compounded in said fiber compounding step are at least one selected from the group consisting of aromatic polyamide fibers, viscose rayon fibers, acrylic fibers, polyvinyl alcohol fibers and cotton fibers.

3. The process for producing a matrix for a friction material according to claim 1, wherein said inorganic staple fibers supplied in said supplying step are at least one selected from the group consisting of glass staple fibers, rock wool, carbon staple fibers and ceramic staple fibers.

4. The process for producing a matrix for a friotion material according to claim 1, wherein said powder materials supplied in said supplying step are at least one selected from the group consisting of inorganic filler materials and friction regulating agents.

5. The process for producing a matrix for a friction material according to claim 4, wherein said inorganic filler materials are at least one selected from the group consisting of barium sulfate, calcium carbonate, magnesium carbonate, diatomaceous earth, dolomite and calcium hydroxide.

6. The process for producing a matrix for a friction material according to claim 4, wherein said friction regulating agents are cashew dust.

7. The process for producing a matrix for a friction material according to claim 4, wherein said inorganic staple fibers and said powder materials are supplied independently of each other in said supplying step.

8. The process for producing a matrix for a friction material according to claim 1, wherein said inorganic filaments twisted together with said slivers are at least one selected from the group consisting of glass fiber filaments and rock wool.

9. The process for producing a matrix for a friction material according to claim 1, wherein said metallic wires twisted together with said slivers are at least one selected from the group consisting of brass wires, copper wires, aluminum wires, zinc wires, steel wires and stainless steel wires.

FIG.1

# FIG.2

MATERIAL CONSUMPTION RATE (%)

o··· GLASS STAPLE FIBERS
( 1st PREFERRED EMBODIMENT )
( COMPARATIVE EXAMPLE 1 )
( COMVENTIONAL EXAMPLE 1 )

•··· ROCK WOOL
( 2nd PREFERRED EMBODIMENT )
( COMPARATIVE EXAMPLE 2 )
( CONVENTIONAL EXAMPLE 2 )

80
70
60
50
40

CONVENTIONAL
EXAMPLES
1 & 2

1st & 2nd
PREFERRED
EMBODIMENTS

COMPARATIVE
EXAMPLES

EP 0 451 320 A2